# FASCICULE DE BREVET EUROPEEN

(11) **EP 1 156 493 B1**
(45) Date de publication et mention de la délivrance du brevet: **26.10.2005**
(21) Numéro de dépôt: 01401204.1
(22) Date de dépôt: 11.05.2001
(51) Int. Cl.: H01B 1/24, H01B 3/44, C08K 3/04

(54) **Composition semi-conductrice réticulable et cable électrique à pellicule semi-conductrice**
Vernetzbare halbleitende Zusammensetzung und elektrisches Kabel mit halbleitendem Überzug
Crosslinkable semi-conductive composition and electrical cable with semi-conductive film

(30) Priorité: 19.05.2000 FR 0006478
(43) Date de publication de la demande: 21.11.2001
(73) Titulaire: Sagem SA, 75016 Paris (FR)
(72) Inventeur: Lecoeuvre, Jean-François, 75625 Paris Cedex 13 (FR); Paty, Karine, 75625 Paris Cedex 13 (FR); Poisson, Bernard, 75625 Paris Cedex 13 (FR); Sanchez, Patrick, 75625 Paris Cedex 13 (FR)
(74) Mandataire: Touati, Catherine

(56) Documents cités:
- EP-A- 0 364 848
- EP-A- 0 420 271
- EP-A- 0 962 944
- WO-A-97/19134
- US-A- 4 246 142
- US-A- 4 286 023
- DATABASE WPI Section Ch, Week 198220 Derwent Publications Ltd., London, GB; Class A18, AN 1982-40684E XP002156392 & JP 57 061041 A (MITSUBISHI PETROCHEMICAL CO LTD), 13 avril 1982 (1982-04-13)
- DATABASE WPI Section Ch, Week 198152 Derwent Publications Ltd., London, GB; Class A12, AN 1981-95567D XP002156393 & JP 56 145608 A (HITACHI CABLE LTD), 12 novembre 1981 (1981-11-12)
- DATABASE WPI Section Ch, Week 197904 Derwent Publications Ltd., London, GB; Class A18, AN 1979-06613B XP002156394 & JP 53 141480 A (HITACHI CABLE LTD), 9 décembre 1978 (1978-12-09)
- PATENT ABSTRACTS OF JAPAN vol. 016, no. 294 (E-1225), 29 juin 1992 (1992-06-29) & JP 04 079105 A (FUJIKURA LTD), 12 mars 1992 (1992-03-12)

## Description

La présente invention concerne les câbles électriques, destinés principalement à des réseaux moyenne et haute tension, qui doivent rester étanches pendant des durées de vie importantes.

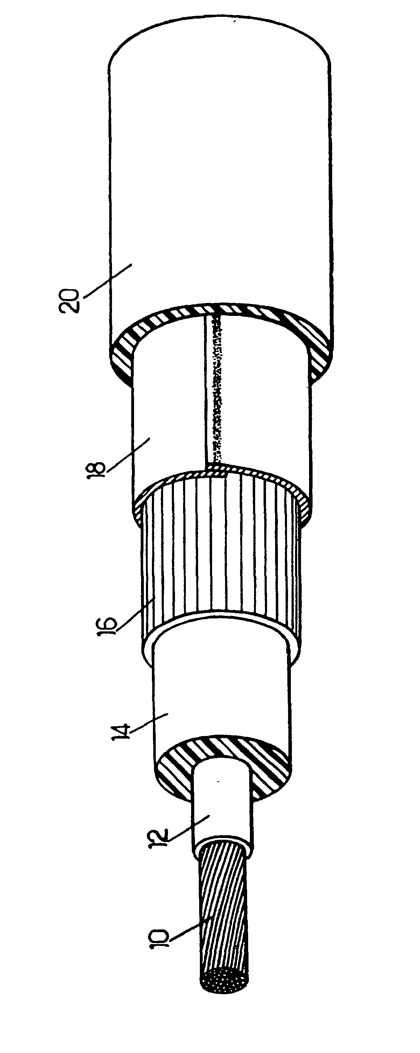

La constitution des câbles à un conducteur de ce type est habituellement celle schématisée sur la figure. Le conducteur central 10 est formé d'un faisceau de fils souvent enroulés en hélice, généralement en cuivre ou aluminium, et il est revêtu d'une pellicule 12 de matériau dit semi-conducteur destinée notamment à rendre lisse la surface extérieure du faisceau et à réduire en conséquence les pointes de champ électrique. Une couche 14 de matériau isolant, en général en polyéthylène ou EPR réticulé au peroxyde, recouvre l'ensemble conducteur - pellicule. Elle est en général recouverte d'une seconde pellicule de matériau semi-conducteur 16, dite semi-conducteur externe. Les trois couches ainsi constituées sont généralement réticulées à chaud par décomposition de peroxyde ; elles peuvent également l'être par procédé silane.

L'ensemble ainsi constitué, souvent qualifié de coeur électrique, est protégé contre l'humidité qui risque de provoquer des arborescences électriques. On utilise pour cela un tube conducteur 18, habituellement en aluminium ou en cuivre et ayant généralement une à quelques centaines de microns d'épaisseur, qui constitue en même temps un écran électrique. Ce tube est souvent constitué par un feuillard ou un ruban replié ou bobiné autour de l'isolant avec recouvrement des bords et collage, par exemple à chaud à l'aide d'un produit qualifié de "hot melt". Le tube métallique peut également être constitué d'un métal extrudé, par exemple en plomb ou aluminium. Enfin une gaine de protection mécanique 20 en matériau de type polyéthylène ou polychlorure de vinyle, qui combine de bonnes caractéristiques mécaniques et de résistance à la fissuration et un bon comportement au vieillissement thermique, est collée sur l'écran. Souvent une poudre d'étanchéité est placée sur la pellicule 16, cannelée extérieurement, avant mise en place du tube. Une autre solution consiste à utiliser une pellicule 16 lisse, sur laquelle on place un ruban gonflant qui peut être conducteur, puis le tube métallique. Des fils peuvent également être ajoutés si la section de l'écran métallique s'avère insuffisant pour écouler les courants de court-circuit. Des combinaisons entre ces différents constituants peuvent également être utilisées.

De tels câbles sont notamment utilisés pour la distribution moyenne tension, entre 12 et 20 kV.

Pour de nombreuses applications, il est souhaitable de rendre la pellicule semi-conductrice externe pelable, c'est-à-dire séparable de l'isolant sur lequel elle se trouve, sous une force limitée, généralement inférieure à 25 N/cm, à une température de 20°C. L'utilisation d'un tel semi-conducteur externe facilite la préparation des extrémités de câble en vue de leur jonction ou de leur terminaison. Par la suite, le terme "semi-conductrice" sera quelquefois abrégé en "conductrice" par simplicité.

On utilise déjà diverses compositions permettant de réaliser de tels semi-conducteurs externes. En particulier, une composition comprenant :
- un copolymère d'acétate de vinyle et d'éthylène (EVA) ayant une teneur en acétate de vinyle de 40 à 45 %, un tel polymère permettant d'absorber du noir de carbone de par ses groupements acétate et limitant l'adhésion sur la couche 14 de matériau isolant,
- un caoutchouc synthétique acrylonitrile - butadiène, dit NBR, dont le rôle est de réduire la force d'adhérence sur la couche de matériau isolant pour l'amener à la valeur souhaitée, généralement comprise entre 5 et 25 N/cm à 20°C,
- du noir de carbone conducteur, dont la teneur est généralement d'environ 40 à 60 % de celles des élastomères.

La composition comprend souvent aussi des lubrifiants, des antioxydants et un agent de réticulation des copolymères, constitué par des peroxydes.

La composition ci-dessus donne de bons résultats techniques. Mais son coût est élevé du fait qu'elle utilise un EVA à 40 à 45 % d'acétate de vinyle, qui est peu disponible et onéreux. On ne peut en effet obtenir ce type de copolymère EVA que par un procédé complexe de fabrication, mettant en oeuvre une polymérisation en solution.

La présente invention vise en conséquence à fournir une composition semi-conductrice vulcanisable présentant des propriétés électriques, mécaniques, de tenue au vieillissement et d'adhésion comparables à celles des meilleures compositions antérieurement connues, mais utilisant un copolymère ayant une teneur inférieure à 40 % en monomère, donc fabricable par un procédé haute pression, proche de celui utilisé pour le polyéthylène, donc plus disponible et de coût beaucoup moins élevé.

Des compositions conductrices utilisant par exemple des copolymères éthylène-acétate de vinyle avec des teneurs en EVA inférieures à 40 % ont déjà fait l'objet de descriptions, par exemple dans le document EP 0 420 271 B1, mais ces formulations sont plutôt restrictives, avec en particulier une teneur en copolymère EVA supérieure à 40 %, des limites sur la surface spécifique du noir de carbone, qui doit être comprise entre 30 et 60 m²/g, et une teneur en additifs (plastifiants, lubrifiant, charges neutres, anti-oxydant, anti-UV) qui doit être inférieure à 3 %.

Les formules proposées ne permettent pas d'atteindre des forces de pelage inférieures à 40 N/cm, alors qu'il est souhaitable d'arriver à des forces inférieures à 40 N/cm et plutôt comprise entre 5 et 25 N/cm, pour permettre une préparation aisée des jonctions et terminaisons de câbles.

Dans ce but, l'invention propose notamment une composition réticulable suivant la revendication 1 ; elle comprend
- une phase polymère constituée de :
   - copolymère éthylène - sel d'acide organique d'un radical alkyl, alkényl ou alkynyl comprenant de 26 à 40 % en poids de monomère, représentant 50 à 90 % en poids de la phase polymère,
   - copolymère acrylonitrile - butadiène, dit NBR, à 25 à 50 % en poids d'acrylonitrile, représentant 10 à 50% en poids de la phase polymère,
- du noir de carbone ayant une surface spécifique inférieure à 170 m²/g, représentant 40 à 75 % en poids de la phase polymère,
- des additifs, tels anti-oxydants, anti-cuivres, peroxydes, silanes, dont les quantités resteront en général inférieures à 5 % de la phase polymère où la teneur en copolymère d'éthylène est comprise entre 30 et 35 % de la totalité de la composition,
   éventuellement :
- au moins un plastifiant aliphatique, aromatique ou naphténique dont la teneur en poids est avantageusement inférieure à 20 % de la phase polymère,
- des lubrifiants pouvant appartenir aux familles des stéarates, oléates, amides, cires de polyéthylène, silicone, dont la teneur sera en général inférieure à 10 % de la phase polymère,
- des charges minérales neutres (craie, kaolin, alumine, talc, silice), avec une teneur en général inférieure à 50 % de la phase polymère.

Le copolymère peut notamment être un des suivants, qui se sont révélés particulièrement avantageux :
EVA : éthylène - acétate de vinyl, qui s'est révélé particulièrement avantageux,
EBA : éthylène - acrylate de butyl
EMA : éthylène-acrylate de méthyl
EEA : éthylène - acrylate d'ethyl

Dans la pratique, les alkyls utilisés seront en général des alkyls inférieurs (jusqu'à 5 atomes de carbone).

En termes pondéraux directs, les formulations selon l'invention auront généralement la composition suivante :
- 25 à 40 % de copolymères EVA (éthylène - acétate de vinyl), tels que décrits ci-dessus,
- 7 à 25 % de copolymères NBR (butadiène - acrylonitrile), tels que décrits ci-dessus,
- 19 à 40 % de noir de carbone présentant une surface spécifique inférieure à 170 m²/g, telle que mesurée suivant la norme ASTM D 4820,
- 0,4 à 3 % d'additifs tels que peroxydes et anti-oxydants.
Il peut s'y ajouter :
- 0 à 25 % de charge neutre (craie, kaolin, talc, silice, alumine, etc.),
- 0 à 20 % de plastifiant aliphatique, aromatique ou naphténique,
- 0 à 10 % de lubrifiants.

Un des avantages déterminants des formulations selon l'invention est d'utiliser des copolymères plus disponibles et moins onéreux.

La formulation semi-conductrice choisie constituera, sur le plan technique, un compromis de caractéristiques lui permettant de faire l'objet d'une exploitation industrielle.

Dans ce compromis interviennent en particulier :
- la facilité de mise en oeuvre du matériau, exprimée à la fois par la viscosité qui doit être suffisamment faible pour éviter l'auto-échauffement de la matière au cours de l'extrusion, et le temps de grillage, qui doit être assez élevé pour éviter tout démarrage de la réaction de réticulation dans l'outillage d'extrusion,
- la réactivité, qui exprime la vitesse de réaction du matériau dans le processus de réticulation,
- la résistivité, qui doit être suffisamment faible pour que la couche extrudée exerce efficacement son rôle d'écran conducteur,
- les caractéristiques mécaniques, qui doivent être suffisamment élevées pour permettre la pelabilité du matériau sans que celui-ci se déchire ou se rompe,
- la pelabilité, qui doit être comprise entre des limites hautes et basses, de façon à ce que la couche conductrice puisse être séparée facilement de l'isolant, sans cependant qu'il y ait risque de décollement inopiné entre l'isolant et la couche conductrice, ce qui nuirait au fonctionnement électrique du câble. Une fourchette de pelabilité de 5 à 25 N/cm à 20°C, mesurée par pelage à 180 degrés entre l'isolant et la couche conductrice suivant la norme NFC 33223, permet en particulier une préparation aisée des câbles, sans nuire à leurs propriétés électriques,
- l'aspect de surface de l'isolant après pelage de la couche conductrice, qui doit être suffisamment lisse, et ne pas présenter de traces de composition conductrice qui nuiraient à la qualité électrique de la connexion ou terminaison.

Souvent une teneur en noir de carbone comprise entre 27 et 35% et ou une surface spécifique de 30 à 80 m² / g donnera les meilleurs résultats. La teneur en copolymère d'éthylène sera fréquemment comprise entre 30 et 35% de la totalité de la composition.

L'invention propose également un procédé de fabrication d'un câble isolé, suivant lequel on revêt, de façon simultanée, en utilisant une tête triple, un conducteur électrique massif ou câblé avec un semi-conducteur interne, un isolant et une couche conductrice externe en une composition du type défini ci-dessus, et on réticule les trois couches immédiatement après l'extrusion par passage du conducteur revêtu dans un tube chauffé sous pression gazeuse.

Le peroxyde et l'anti-oxydant nécessaires à la réticulation de l'isolant 14, par exemple à base de polyéthylène, peuvent être injectés sous forme liquide au moment de l'extrusion. Le peroxyde peut être notamment du peroxyde de dicumyle, du peroxyde de butylcumyle, ou du ditertiobutyl. Le peroxyde de réticulation de la couche conductrice peut être injecté dans l'extrudeuse au moment de la réalisation du câble. On obtient ainsi un câble électrique comprenant un conducteur central revêtu d'une pellicule de matériau semi-conducteur, d'une couche de matériau isolant, d'une couche externe 16 de matériau semi-conducteur selon l'invention, d'un écran métallique 18 formé de fils ou rubans, et d'une gaine extérieure de protection. Le câble se prête à l'assemblage sous forme de terne, avec éventuellement un porteur.

Les caractéristiques ci-dessus ainsi que d'autres apparaîtront également à la lecture de la description qui suit d'exemples comparatifs qui permettront de mieux comprendre les avantages des compositions selon l'invention.. La description se réfère à la figure unique qui l'accompagne, déjà mentionnée, qui montre schématiquement un câble de constitution type.

Les exemples qui suivent mettront en évidence les avantages des compositions suivant l'invention.

### Exemple 1 : référence

La formulation ci-dessous est représentative des semi-conducteurs pelables utilisés couramment aujourd'hui sur les câbles 12/20 kV de type NFC 33223 :

| | |
|---|---|
| Caoutchouc EVA (40 % de VA) | 77 |
| Caoutchouc NBR (33 % ACN) | 23 |
| Craie | 10 |
| Noir conducteur de type P (140 m²/g) | 60 |
| Plastifiant | 5 |
| Stéarate de zinc | 3 |
| Anti-oxydant | 2 |
| Peroxyde à 40 % | 2 |

De telles formulations sont fabriquées suivant des procédés connus, par exemple sur des mélangeurs internes de type Banbury, ou des mélangeurs continus de type BUSS.

Les conditions et paramètres de fabrication sont adaptés de façon à garantir une bonne dispersion des charges, et en particulier du noir de carbone.

Lorsqu'un mélange homogène est obtenu, la formulation est granulée à chaud ou à froid, puis stockée en containers.

Les granulés sont ensuite repris pour alimenter une ligne de fabrication de câble équipée d'un groupe de 3 extrudeuses destinées à recouvrir simultanément des 3 couches (semi-conducteur interne, isolant et semi-conducteur externe pelable) le conducteur d'un câble 12/20 Kv.

Cette ligne de fabrication est également dotée d'un tube de vulcanisation continue qui va permettre, avec ses conditions particulières de pression et température, de réticuler simultanément les 3 couches de matériaux.

Avec une formulation et des procédés tels que décrits ci-dessus, on obtient sur la couche conductrice les caractéristiques suivantes :

| | |
|---|---|
| Résistance à la traction (RT, en Mpa) | 13,4 |
| Allongement à la rupture (AR, en %) | 350 |
| Résistitivité à 20°C (Ohm-cm) | 890 |
| Résistivité à 90°C (Ohm-cm) | 430 |
| Pelabilité sur XLPE à 20°C (N/cm) | 11.1 |
| Pelabilité sur XLPE à 40° C (N/cm) | 9.9 |

Les conditions de test pour les différentes caractéristiques sont celles de la NFC 33223. On peut constater les bonnes caractéristiques mécaniques, électriques et de pelabilité des formulations telles qu'utilisées aujourd'hui.

### Exemple 2

Cet exemple permet de comparer les caractéristiques des formules connues de l'homme de l'art avec celles conformes à l'invention.

Les échantillons nécessaires aux différents tests sont obtenus en coextrudant sur un groupe de 2 extrudeuses de laboratoire :
- d'une part un isolant réticulable à base de PE, contenant un polyethylène radicalaire de MFR = 2g/10 minutes mesuré suivant la norme ISO 1133 (190° C, 21.6N), un peroxyde liquide injecté au moment de l'extrusion (Ditertio butyl peroxyde), et un anti-oxydant de type phénolique et,
- d'autre part chacune des formulations d'essais.

Les éprouvettes se présentent sous forme de conducteurs massifs d'aluminium de 10 mm de diamètre environ, recouverts de 3 mm d'isolant, et de 1 mm environ de couche conductrice ; une fois réalisées, les éprouvettes sont placées dans un tube de vapeur surchauffée à 200°C, puis laissées au repos 24 à 48 heures avant d'effectuer les tests.

| | Référence | 1 | | 2 | 3 |
|---|---|---|---|---|---|
| Caoutchouc EVA (40% VA) | 78 | | | | |
| Elvax 350 (25 % VA) | | 70 | | | |
| Elvax 150 (33 % VA) | | | | 70 | |
| Evatane 3325 (33 % VA) | | | | | 70 |
| Caoutchouc NBR (33 % ACN) | 22 | 30 | | 30 | 30 |
| Craie | 10 | 27 | | 27 | 27 |
| Noir conducteur type P (140m²/g) | 60 | 56 | | 56 | 56 |
| Plastifiant aliphatique | 5 | | | | |
| Plastifiant aromatique | | 6 | | 6 | 6 |
| Stéarate de zinc | 3 | 3 | | 3 | 3 |
| Cire de Pe | | 4 | | 4 | 4 |
| Antioxydant | 2 | 2 | | 2 | 2 |
| Peroxyde à 40 % | 3 | 2 | | 2 | 2 |
| Résistance à la traction (MPa) | 13,4 | 14,4 | | 10,1 | 14,6 |
| Allongement à la rupture (%) | 350 | 280 | | 367 | 408 |
| Résistivité à 200°C (ohm-cm) | 890 | 74 | | 74 | 29 |
| Résistivité à 300°C (ohm-cm) | 429 | 226 | | 134 | 78 |
| Pelabilité à 20°C N/cm | 11,1 | 48,4 | | 29,5 | 26 |
| Pelabilité à 30°C N/cm | 9,9 | 44 | | | 31 |

Cette comparaison met en évidence que, par rapport à la formule de référence, la formulation 1, qui utilise un EVA à 25 % d'acétate de vinyle, ne permet pas une séparation facile entre la couche conductrice et l'isolant.

Par contre, les formules 2 et 3, réalisées suivant l'invention, se rapprochent très sensiblement d'un matériau utilisable industriellement, particulièrement la composition N°3.

Par rapport à la formule de référence, ces compositions 2 et 3 sont particulièrement caractérisées par :
- l'utilisation d'un copolymère EVA à 33 % de VA
- la baisse de la teneur en copolymère EVA dans la composition
- l'utilisation d'un plastifiant aromatique
   Ce plastifiant peut être choisi parmi les plastifiants connus, par exemple l'Exarol 25 de Total, ou le Shellflex 729C de Shell, ou un plast fiant oligomère naphténique alkylé.
- l'anti-oxydant est avantageusement de type TMQ ; d'autres stabilisants de nature aminée (par exemple Vulkanox DDA de Bayer), ou ce type phénolique, tels que Irganox 1010, Irganox 1076, ou Irganox1035 de Ciba-Geigy, des stabilisants tels que Santonox R peuvent également être utilisés.

Un avantage des formulations selon l'invention est également une baisse significative de la résistivité ; cela constitue une amélioration intéressante apportée par l'utilisation des EVA à moins de 40 % de VA.

### Exemple 3

Cet exemple illustre sur la base d'une formule proche de la formule 3, comment il est possible de baisser encore la force de pelage en jouant sur la nature du noir de carbone, et particulièrement sur sa surface spécifique. A part la référence, les échantillons sont préparés de la même façon qu'à l'exemple 2.

| | Référence | 4 | 5 | 6 |
|---|---|---|---|---|
| Type de polymère | EVA 40 % | Evatane 3325 | Evatane 3325 | Evatane 332 |
| Type de noir | Noir conducteur 140 m²/g | BP 3615 60 m²/g | BP 3515 | BP 3515 |
| Taux de noir (per) | 68 | 60 | 56 | 60 |
| Viscosité Mooney à 140°C | 26,3 | 14,9 | 20 | 24,7 |
| Temps de grillage à 140°C | 22,9 | >500 | >500 | >500 |
| Caractéristiques rhéométriques | 1,29 | 0,76 | 1,05 | 1,35 |
| ML | 4,02 | 3,03 | 3,85 | 4,46 |
| MHL | 1,02 | 1,08 | 1,08 | 1,08 |
| t 90% | | | | |
| RT (Mpa) | 13,4 | 13,6 | 13,2 | 12 |
| Pelabilité à 20°C | 11,1 | 24,5 | 22,6 | 20,5 |
| Pelabilité à 40°C | 9,9 | 18,3 | 17,2 | 16,8 |

Cette série d'essais amène aux constatations suivantes :

Par rapport aux formulations courantes, les préparations selon l'invention conduisent à des viscosités faibles, ce qui est un avantage très important pour la mise en oeuvre. Cette viscosité réduite s'accompagne d'une sécurité accrue, puisque le temps de grillage devient élevé. Pour autant, les caractéristiques rhéométriques, et notamment le temps T90 pour atteindre 90 % de la vulcanisation, montrent que la vitesse de réticulation du matériau est conservée.

Comme dans l'exemple précédent, la résistivité du matériau est toujours très basse, y compris si on abaisse le taux de noir de carbone.

La pelabilité, en particulier avec la formulation 6, est très acceptable, et conforme à l'objectif visé de 25 N/cm, y compris à 40°C, garantissant ainsi une préparation aisée des jonctions et extrémités de câbles.

### Exemple 4

Cet exemple est destiné à montrer comment, à partir d'une formule proche de la composition 6, contenant un EVA, un noir, et un taux de charges inertes et conforme à l'invention, on peut, en faisant varier le rapport EVA/NBR, moduler l'effort de pelabilité.

Les échantillons sont préparés de la même façon qu'à l'exemple 2.

| | 7 | 8 | 9 |
|---|---|---|---|
| Evatane 3325 | 70 | 63 | 63 |
| Krynac 3450 | 30 | 37 | 37 |
| Craie | 27 | 27 | 27 |
| Noir BP 3515 | 65 | 65 | |
| Noir CSX 606 (68 m²/g) | | | 65 |
| Plastifiant aromatique | 6 | 6 | 6 |
| Stéarate de zinc | 3 | 3 | 3 |
| Cire de PE | 4 | 4 | 4 |
| Stabilisant | 2 | 2 | 2 |
| Péroxyde à 40 % | 2 | 2 | 2 |
| | | | |
| RT (Mpa) | 10.1 | 11 | 11 |
| AR (%) | 360 | 336 | 346 |
| Variation AR après 14 j à 100 °C | 17 | 19 | |
| Variation AR après 42 j à 100 °C | 28 | 29 | |
| Résistivité à 20 °C (Ohm-cm) | 33 | 41 | 38 |
| Résistivité à 90 °C (Ohm-cm) | 142 | 113 | 66 |
| Pelabilité à 20 °C (N/cm) | 16.8 | 11.1 | 20.5 |
| Pelabilité à 40 °C (N/cm) | 13 | 8.5 | 17.2 |
| Pelabilité 20 °C après 14j 100°C | 12.7 | 10.1 | |
| Pelabilité 20 °C après 42 j 100°C | 13.8 | 9.4 | |

On remarque dans cette série de formulations qu'en modulant le taux de noir (comparaison des formules 6 et 7), ainsi qu'en jouant sur le rapport EVA/NBR (comparaison des formules 7 et 8), il est possible d'amener la pelabilité des couches conductrices à des valeurs comparables à celles de l'art antérieur, en garantissant une bonne conservation des caractéristiques après vieillissement.

Comme décrit précédemment, ces formules présentent également une grande sécurité de mise en oeuvre et une bonne réactivité.

On constate également que ces formulations conservent leurs caractéristiques mécaniques et de pelabilité, même après vieillissement de 42 jours à 100°C.

La formule 9, qui contient du noir de carbone CSX 606 de Cabot présentant une surface spécifique un peu plus élevée (60 m²/g), représente elle aussi un compromis de caractéristiques tout à fait acceptable.

### Exemple 5

Cet exemple est destiné à montrer comment on peut, sur la base de la même formulation semi-conductrice, conforme à l'invention, moduler la force d'adhérence entre la couche conductrice et l'isolant en choisissant udicieusement le peroxyde utilisé pour la réticulation. Dans les essais ci-dessous, l'isolant est successivement constitué d'un polyéthylène de MFR = 2g/10 min, mesuré suivant la norme ISO 1133 à 190°C et 21,6 N, d'un anti-oxydant de type phénolique, et d'un peroxyde de mise en oeuvre injecté sous forme liquide en même temps que des granulés du mélange élastomères - noir de carbone, choisi parmi les composés suivants :
DTBP di-tertio butyl peroxyde
TBCP ter-butyl cumyl peroxyde
DCP dicumyl peroxyde.

Les quantités de peroxyde sont celles habituellement utilisées dans ces types d'isolant, c'est à dire de 1,5 à 2 % de la quantité de polyéthylène.

| | **Isolant avec DTBP** | **Isolant avec TBCP** | **Isolant avec DCP** |
|---|---|---|---|
| EVA (33% de VA) | 63 | 63 | 63 |
| NBR (33% ACN) | 37 | 37 | 37 |
| CSX 606 (68 m²/g) | 63 | 68 | 68 |
| Craie | 27 | 27 | 27 |
| Plastifiant aromatique | 6 | 6 | 6 |
| Stéarate de zinc | 3 | 3 | 3 |
| Cire de PE | 4 | 4 | 4 |
| Anti-oxydant | 2 | 2 | 2 |
| Peroxyde à 40 % | 1.2 | 1.2 | 1.2 |
| RT (Mpa) | 10.6 | 11.4 | 10.3 |
| AR (%) | 346 | 345 | 347 |
| Résistivité à 20°C | 14 | 35 | 22 |
| Résistivité à 90°C | 72 | 113 | 101 |
| Pelabilité à 20°C | 15.8 | 11.1 | 9.4 |
| (N/cm) | | | |
| Pelabilité à 40 °C | 14.2 | 10.2 | 7.1 |
| (N/cm) | | | |

Ce tableau de résultats montre comment, en abaissant la température de décomposition du peroxyde de l'isolant, on peut, avec les formulations conductrices selon l'invention, moduler la force de pelage entre isolant et couche conductrice, et ainsi atteindre des forces de séparation qui permettent une préparation aisée des jonctions et terminaisons de câbles.

### Exemple 6

On réalise industriellement un câble de 150 mm² 12/20 kV, répondant à la description de la norme NFC33223. L'isolant est constitué d'un polyéthylène de MFR 2,1 à 190°C, et sous 21,6 N (mesuré suivant la norme ISO 1133), dans lequel on injecte, au moment de l'extrusion, une solution contenant un peroxyde liquide de type DTBP.

Le semi-conducteur externe correspond à la formulation 8 de l'exemple 4. Le câble est réalisé sur une ligne d'isolation type chaînette comportant un groupe de trois extrudeuses à tête triple.

Les caractéristiques de la couche conductrice pelable sont les suivantes :

| | | |
|---|---|---|
| RT (Mpa) | | 14.3 |
| AR (%) | | 239 |
| Resistivité (Ohm-cm) | à 20° C | 90 |
| | à 90° C | 224 |
| Pelabilité (N/cm) | à 20° C | 18.3 |
| | à 40° C | 13 |

Les caractéristiques obtenues sont satisfaisantes ; de plus, on constate, par rapport aux câbles de l'art antérieur, une amélioration sensible de l'état de l'interface isolant/semi-conducteur avec en particulier moins de micro-traces d'arrachement du semi-conducteur pelable à la surface de l'isolant.
Plus généralement, suivant un procédé de fabrication d'un câble isolé, on peut faire passer un conducteur successivement :
- à travers une tête d'extrusion multiple reliée à trois extrudeuses permettant d'injecter simultanément une composition semi-conductrice de formation d'une pellicule interne, une composition isolante et une composition du genre cidessus de formation d'une pellicule semi-conductrice externe pelable, et
- à travers un tube de mise sous pression gazeuse et de chauffage.

## Revendications

1. Composition réticulable comprenant :
- une phase polymère essentiellement constituée de :
- copolymère éthylène - acétate de vinyle comprenant de 26% à moins de 40% en poids d'acétate de vinyle (VA), représentant 50 à 90 % en poids de la phase polymère,
- copolymère acrylonitrile - butadiène, dit NBR, à 25 à 50 % en poids d'acrylonitrile, représentant 10 à 50% en poids de la phase polymère,
- du noir de carbone ayant une surface spécifique inférieure à 170 m²/g, représentant 40 à 75 % en poids de la phase polymère,
- des additifs, tels anti-oxydants, anti-cuivres, peroxydes, silanes, dont les quantités resteront inférieures à 5 % de la phase polymère,
où la teneur en copolymère d'éthylène est comprise entre 30 et 35% de la totalité de la composition.

2. Composition suivant la revendication 1 comprenant en outre de la craie à une teneur inférieure à 50% de la phase polymère.

3. Composition suivant l'une quelconque des revendications 1 et 2, comprenant au moins un plastifiant aliphatique, aromatique ou naphténique dont la teneur en poids est inférieure à 20% de la phase polymère.

4. Composition suivant l'une quelconque des revendications 1 à 3, comprenant des lubrifiants pouvant appartenir aux familles des stéarates, oléates, amides, cires de polyéthylène, silicone, dont la teneur est inférieure à 10% de la phase polymère.

5. Composition suivant l'une quelconque des revendications 1 à 4, comprenant des charges minérales neutres choisies dans le groupe constitué de la craie, du kaolin, du talc, de la silice et de l'alumine, avec une teneur inférieure à 50% de la phase polymère.

6. Composition suivant l'une quelconque des revendications 1 à 5, **caractérisée en ce que** la teneur en noir de carbone est comprise entre 27 et 35% de la composition.

7. Composition suivant l'une quelconque des revendications 1 à 6, **caractérisée en ce que** le noir de carbone a une surface spécifique de 30 à 80 m² / g.

8. Procédé de fabrication d'un câble isolé, suivant lequel on revêt, de façon simultanée, en utilisant une tête d'extrusion triple, un conducteur électrique massif ou câblé avec un semi-conducteur interne, un isolant et une couche conductrice externe consistant en une composition suivant l'une quelconque des revendications 1 à 7, et on réticule les trois couches immédiatement après l'extrusion par passage du conducteur revêtu dans un tube chauffe sous pression gazeuse.

9. Procédé suivant la revendication 8, **caractérisé en ce que** le peroxyde et l'anti-oxydant destinés à la réticulation de l'isolant sont injectés sous forme liquide au moment de l'extrusion.

10. Procédé suivant la revendication 9, **caractérisé en ce que** le peroxyde est du peroxyde de dicumyle, du peroxyde de butylcumyle, ou du peroxyde de ditertiobutyle.

11. Procédé suivant la revendication 10, **caractérisé en ce que** le peroxyde destiné à la réticulationde la couche conductrice est injecté dans l'extrudeuse lors de la réalisation du câble.

12. Câble électrique comprenant un conducteur central (10) revêtu d'une pellicule interne de matériau semi-conducteur, d'une couche (14) de matériau isolant, d'une pellicule externe de matériau semi-conducteur, d'un écran métallique forme de fils ou rubans et d'une gaine extérieure de protection, **caractérisé en ce que** la dite pellicule externe est constituée par réticulation d'une composition suivant l'une quelconque des revendications 1 à 7.

13. Câble électrique suivant la revendication 12, **caractérisé en ce que** la force de décollement sur la couche de matériau isolant est inférieure à 40 N/cm, de préférence comprise entre 5 et 25N/cm.

## Claims

1. A cross-linkable composition comprising, by weight of the full composition:
- a polymer phase essentially constituted of ethylene vinylacetate copolymer;
- an ethylene comprising 26% to less than 40% by weight of vinylacetate (VA), representing 50% to 90% by weight of the polymer phases;
- an acrylonitrile-butadiene copolymer (hereinafter NBR) having 25% to 50% by weight acrylonitrile, representing 10% to 50% by weight of the polymer phase;
- carbon black having a specific surface area of less than 170 m²/g, representing 40% to 75% by weight of the polymer phase;
- additives such as antioxidants, anti-coppers, peroxides, silanes in amounts that remain below 5% of the polymer phase.

2. A composition according to claim 1, further comprising chalk in an amount below 50% by weight of the polymer phase.

3. A composition according to one of claims 1 or 2, further comprising a aliphatic, aromatic, or naphthenic plasticizer in an amount by weight below 20% of the polymer phase.

4. A composition according to one of claims 1 to 3, further comprising lubricants belonging to the families of stearates, oleates, amides, polyethylene wax, silicone, in an amount below 10% of the polymer phase.

5. A composition according to one of claims 1 to 4, further comprising inert mineral fillers selected from the group consisting of chalk, kaolin, talc, silica and alumina, with an amount below 50% of the polymer phase.

6. A composition according to one of claims 1 to 5, wherein the carbon black content is in the range 27% to 35% of the composition.

7. A composition according to one of claims 1 to 6, wherein the carbon black has a specific surface area in the range 30 m²/g to 80 m²/g.

8. A method of manufacturing an insulated cable, wherein a solid or cabled electrical conductor is coated simultaneously using a triple head of extrusion with an inner semiconductor, an insulator, and an outer conductive layer having a composition according to one of claims 1 to 7, and cross-linking all three layers immediately after extrusion by passing the coated conductor through a heated tube under gas pressure.

9. Method according to claim 8, wherein the peroxide and the antioxidant for cross-linking the insulator are injected in liquid phase during extrusion.

10. Method according to claim 9, wherein the peroxide is dicumyl peroxide, butylcumyl peroxide, or ditertiobutyl.

11. Method according to claim 10, wherein the peroxide for cross-linking the conductive layer is injected into the extruder during cable manufacture.

12. Electric cable comprising a central electric conductor (10), coated with an inner layer of semiconductor material, with a layer (14) of insulating material, with an outer layer of semiconductor material, with a metal shield constituted by wires or tapes, and with an external protection sheath, wherein the said outer layer is provided by cross-linking a composition according to one of claims 1 to 7.

13. Electric cable according to claim 12, wherein the force for removing to be exerted on said insulating material is lower than 40 N/cm, preferably comprised between 5 and 25N/cm.

## Patentansprüche

1. Vernetzbare Zusammensetzung, enthaltend:
- eine Polymerphase, welche im Wesentlichen aufweisend:
- einem Ethylen-Vinylacetat-Copolymeren, enthaltend 26 bis 40 Gew.-% Vinylacetat (VA), entsprechend 50 bis 90 Gew.-% der Polymerphase,
- einem Acrylonitril-Butadien-Copolymeren, sog. NBR, mit 25 bis 50 Gew.-% Acrylonitril, entsprechend 10 bis 50 Gew.-% der Polymerphase,
- Ruß (Carbon Black) mit einer spezifischen Oberfläche unter 170 m²/g, entsprechend 40 bis 75 Gew.-% der Polymerphase,
- Zusatzstoffe, wie Antioxidationsmittel, Anti-Kupfer-Mittel, Peroxide, Silane, deren Mengen weniger als 5 % der Polymerphase betragen,
wobei der Gehalt an dem Ethylen-Copolymeren zwischen 30 und 35 % der gesamten Zusammensetzung ausmacht.

2. Zusammensetzung gemäß Anspruch 1, welche außerdem Kreide mit einem Gehalt unter 50 % der Polymerphase enthält.

3. Zusammensetzung gemäß wenigstens einem der Ansprüche 1 und 2, welche wenigstens einen aliphatischen, aromatischen oder naphthenischen Weichmacher, dessen Gehalt unter 20 Gew.-% der Polymerphase beträgt, enthält.

4. Zusammensetzung gemäß wenigstens einem der Ansprüche 1 bis 3, welche Gleitmittel enthält, die zur Familie der Stearate, Oleate, Amide, Polyethylenwachse und/oder Silikone gehören können, und deren Gehalt unter 10 % der Polymerphase beträgt.

5. Zusammensetzung gemäß wenigstens einem der Ansprüche 1 bis 4, welche neutrale mineralische Ladungen, die ausgewählt sind aus der Gruppe, bestehend aus Kreide, Kaolin, Talk, Quarz (SiO₂) und/oder Aluminiumoxid, mit einem Gehalt unter 50 % der Polymerphase enthält.

6. Zusammensetzung gemäß wenigstens einem der Ansprüche 1 bis 5, **dadurch gekennzeichnet, dass** der Gehalt an Ruß zwischen 27 und 35 % der Zusammensetzung beträgt.

7. Zusammensetzung gemäß wenigstens einem der Ansprüche 1 bis 6, **dadurch gekennzeichnet, dass** der Ruß eine spezifische Oberfläche von 30 bis 80 m²/g aufweist.

8. Verfahren zur Herstellung eines isolierten Kabels, welches unter Verwendung eines Dreifach-Extrusionskopfes gleichzeitig mit einem massiven oder mit einem internen Halbleiter verkabelten elektrischen Leiter, einem Isoliermaterial und einer äußeren leitenden Schicht, bestehend aus einer Zusammensetzung gemäß wenigstens einem der Ansprüche 1 bis 7, ummantelt wird, wobei die drei Schichten unmittelbar nach der Extrusion durch Passage des ummantelten Leiters in einer Helzröhre unter Gasdruck vernetzt werden.

9. Verfahren gemäß Anspruch 8, **dadurch gekennzeichnet, dass** das Peroxid und das Antioxidationsmittel, die der Vernetzung des Isoliermaterials dienen, in flüssiger Form zum Zeitpunkt der Extrusion eingespritzt werden.

10. Verfahren gemäß Anspruch 9, **dadurch gekennzeichnet, dass** es sich bei dem Peroxid um Dicumylperoxid, Butylcumylperoxid oder Ditertiobutylperoxid handelt.

11. Verfahren gemäß Anspruch 10, **dadurch gekennzeichnet, dass** das Peroxid, welches der Vernetzung der leitenden Schicht dient, während der Herstellung des Kabels in den Extruder eingespritzt wird.

12. Elektrisches Kabel, enthaltend einen zentralen Leiter (10), der mit einem inneren Überzug eines halbleitenden Materials, einer Schicht (14) eines isoliermaterials, einem äußeren Überzug eines halbleitenden Materials, einer metallischen Abschirmung in Form eines Drahtes oder Bandes und einer äußeren Schutzhülle ummantelt ist, **dadurch gekennzeichnet, dass** der äußere Überzug durch Vernetzung einer Zusammensetzung gemäß wenigstens einem der Ansprüche 1 bis 7 gebildet wird.

13. Elektrisches Kabel gemäß Anspruch 12, **dadurch gekennzeichnet, dass** die Ablösekraft auf der Schicht des Isoliermaterials unter 40 N/cm, bevorzugt zwischen 5 und 25 N/cm, liegt.
